(19) Europäisches Patentamt / European Patent Office / Office européen des brevets

(11) **EP 2 136 602 A1**

(12) **EUROPEAN PATENT APPLICATION**
published in accordance with Art. 153(4) EPC

(43) Date of publication:
**23.12.2009 Bulletin 2009/52**

(51) Int Cl.:
*H04W 88/02* (2009.01)    *G06T 7/00* (2006.01)
*H04W 92/18* (2009.01)

(21) Application number: **08860354.3**

(22) Date of filing: **09.12.2008**

(86) International application number:
**PCT/CN2008/073398**

(87) International publication number:
**WO 2009/074110 (18.06.2009 Gazette 2009/25)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **10.12.2007 CN 200710179059**

(71) Applicant: **Shenzhen Huawei Communication Technologies Co., Ltd
Shenzhen, Guangdong 518129 (CN)**

(72) Inventors:
• **FANG, Ping
Shenzhen
Guangdong 518129 (CN)**
• **LIU, Yuan
Shenzhen
Guangdong 518129 (CN)**
• **WANG, Jing
Shenzhen
Guangdong 518129 (CN)**
• **LI, Kai
Shenzhen
Guangdong 518129 (CN)**

(74) Representative: **Barth, Stephan Manuel
Reinhard, Skuhra, Weise & Partner GbR
Patent- und Rechtsanwälte
Friedrichstrasse 31
80801 München (DE)**

(54) **COMMUNICATION TERMINAL AND INFORMATION SYSTEM**

(57) A communication terminal includes: an image or video collecting and generating module, adapted to collect and generate 3D image or video data; a communication module, adapted to send or receive image or video and generated 3D image or video data; and an image or video display module, adapted to display the 3D image or video according to the collected or received and generated 3D image or video data. An information system includes a 3D image or video information center. The 3D image or video information center further includes: a 3D image or video information relay, adapted to interact with the communication terminal; and a 3D image or video information server, adapted to store 3D image or video information and convert between 3D image or video information and SMS. The communication terminal features simple structure and good performance. The information system supports communication through 3D image or video information.

FIG. 1

EP 2 136 602 A1

**Description**

FIELD OF THE INVENTION

The present invention relates to the mobile telecommunication field, and in particular, to a communication terminal and an information system.

BACKGROUND

Two-dimensional image or video is the carrier for two-dimensional information and can present only the contents of a scene, but not the depth information such as the distance and location of substances. Thus, the two-dimensional image or video is incomplete.

Based on the principles of optical difference, the three-dimensional (3D) video obtains two slightly different images about a same scene and displays a separate image to each eye to form optical difference between two eyes, thus obtaining the depth information about the scene and offering 3D experience to users. A 3D image supports two common forms, that is, a 3D image constructed by presenting different images to the eyes, or a 3D image constructed by presenting a two-dimensional image and an in-depth figure that is related to the two-dimensional image. Therefore, the 3D video technology can provide the depth information that complies with the 3D optical principles, thus truly reflecting the objective scene, and presenting the sense of depth and hierarchy and authenticity of the scene. The 3D image or video technology becomes increasingly important.

The 3D image or video technology is widely used in 3D films, TV programs, 3D video conferences, virtual reality systems, remote industrial control systems, robot navigation, and remote medical systems.

The 3D image or video technology also applies to daily lives. For example, a user views beautiful scenery during traveling and wants to send a 3D short message to present the 3D scene to other users, or a user wants to implement a 3D video call or send 3D image or video information so that either party in the call can sense the 3D scene of the other party while listening to the voice of the other party.

An existing 3D image communication terminal includes:

a 3D image input module, which has multiple cameras to capture images of 3D objects;
a 3D image display module, adapted to display 3D image information; and
a communication module, adapted to at least transmit the 3D image information obtained by the 3D image input module.

The 3D image display module consists of horizontal/vertical optical difference display devices of the integrated imaging type. The cameras are distributed in at least four directions, including top, bottom, left, and right, around the 3D image display device.

When implementing the present invention, the inventor finds at least the following defects of the existing technology: The existing 3D communication terminal needs to use multiple cameras to enter the 3D image information, leading to a complicated structure. In addition, the 3D image or video information cannot be stored.

SUMMARY

A communication terminal and an information system are provided in embodiments of the present invention to collect, implement, and transmit 3D image or video information by using a simple structure.

An information system is provided in an embodiment of the present invention to transmit image or video information by using a simple structure.

A communication terminal is provided in an embodiment of the present invention. The communication terminal includes:

an image or video collecting and generating module, adapted to collect and generate 3D image or video data;
a communication module, adapted to: send an image or video and the generated 3D image or video data; or, receive an image or video and 3D image or video data; and
an image or video display module, adapted to present the 3D image or video according to the collected image or video or received and generated 3D image or video data.

An information system is provided in an embodiment of the present invention. The information system includes a 3D image or video information center. The 3D image or video information center further includes:

a 3D image or video information relay, adapted to interact with the communication terminal; and
a 3D image or video information server, adapted to store 3D image or video information and convert between 3D image or video information and short message.

The communication terminal in the present invention can use the image or video collecting and generating module to collect and generate 3D image or video information, use the communication module to send or receive the image or video and the generated 3D image or video data, and display the data on the image or video display module. Therefore, the structure is simple, and the effects are good.

The information system in the present invention supports communication through 3D image or video information, so that the communication parties can sense the depth information about the scene of each other as well as listening to each other, thus obtaining virtual reality communication experience.

BRIEF DESCRIPTION OF THE DRAWINGS

FIG. 1 shows a structure of a communication terminal in an embodiment of the present invention;
FIG. 2 shows a process of shooting a same scenario twice by using a plane image or video camera provided in an embodiment of the present invention;
FIG. 3 shows two frames of images whose scanning beams are horizontally aligned in an embodiment of the present invention;
FIG. 4 shows a process of applying a two-dimensional-to-3D image sequence processing method in an embodiment of the present invention;
FIG. 5 shows a structure of an image or video generating module in an embodiment of the present invention;
FIG. 6 shows an image collected by an image or video collecting module in an embodiment of the present invention;
FIG. 7 shows a process of processing data by an image or video generating module in an embodiment of the present invention;
FIG. 8 shows a symmetric relation between a target point and a camera in an embodiment of the present invention;
FIG. 9 shows a structure of a communication terminal in a second embodiment of the present invention;
FIG. 10 shows a process of using the layered coding scheme by a communication module of a communication terminal in a second embodiment of the present invention;
FIG. 11 shows a structure of a communication terminal in a third embodiment of the present invention; and
FIG. 12 shows a structure of an information system in an embodiment of the present invention.

DETAILED DESCRIPTION

The technical scheme provided in an embodiment of the present invention is described as follows with drawings.

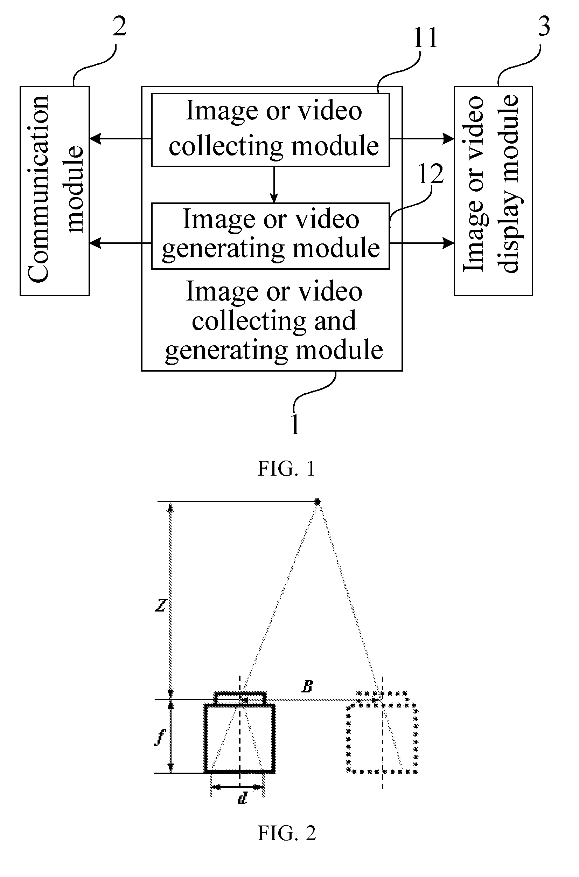

FIG. 1 shows a communication terminal in an embodiment of the present invention. The communication terminal includes:

an image or video collecting and generating module 1, adapted to collect and generate 3D image or video data;
a communication module 2, adapted to send or receive image or video and generated 3D image or video data; and
an image or video display module 3, adapted to display the 3D image or video according to the collected or received and generated 3D image or video data.

Furthermore, the image or video collecting and generating module 1 includes:

an image or video collecting module 11, adapted to collect image or video; and
an image or video generating module 12, adapted to generate 3D image or video data based on the collected image or video.

The image or video collecting module 11 that is adapted to collect image or video can be a single 3D image or video camera, or one or more plane image or video cameras.
A plane image or video camera can collect only plane images or videos. Therefore, the image or video generating module 12 is required for converting the collected plane images or videos into 3D image or video data through different processing methods.
Method 1: The image or video collecting module 11 is a plane image or video camera that can collect two frames of images for a same scenario from different aspects. The image or video generating module 12 then obtains the 3D image or video through 3D matching.

The image or video generating module 12 can perform pre-alignment for the collected images, thus generating 3D image or video data. Or, the image or video generating module 12 can perform pre-alignment for the collected images, perform 3D matching for the two aligned images to obtain the depth information, and generate 3D image or video data by restructuring one image and depth information. FIG. 2 shows a process of shooting a same scenario twice by using a plane image or video camera provided in an embodiment of the present invention. The position shown by real line in the figure indicates the position where the camera collects the first frame of image or video. Then, the camera is moved horizontally for distance $B$. The position shown by dotted line in the figure indicates the position where the camera collects the second frame of image or video after horizontal move. When the contents of the scenario in the two images are not changed or are slightly changed, an image that is approximate to the image shot by a binocular stereo camera or a 3D camera can be obtained. In the figure, $f$ indicates the focus, $Z$ indicates the distance from the scene to the optical center flat, $d$ indicates the distance for moving the imaging point related to the center of the image on the same plane, and $B$ indicates the optical center distance between the positions of the two images collected by the camera. For the two images captured by the camera from different positions, the image or video generating module 12 can use various methods, such as fast epipolar line adjustment, for pre-processing and alignment of scanning beams, thus eliminating the impact of changes to the position of the rear camera of the communication terminal on subsequent 3D matching.

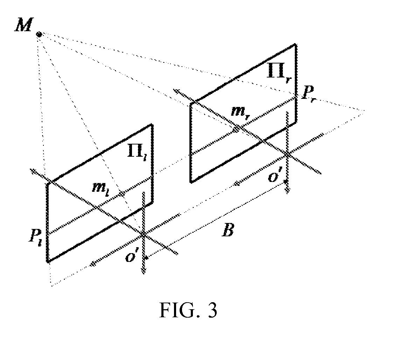

After the image or video generating module 12 performs the pre-processing for the images that are shot at a same scene from two different positions, two frames of images with aligned scanning beams are obtained as shown in FIG. 3. The imaging points of $M$ in the two frames of images are $m_l$ and $m_r$. The depth information can be obtained by using the following formula through polarization constraint:

$$\begin{cases} \dfrac{x_l}{X_l} = \dfrac{f}{Z} \\ \dfrac{x_r}{X_r} = \dfrac{f}{Z} \end{cases} \Rightarrow d_x(m_l, m_r) = x_l - x_r = \dfrac{f}{Z}(X_l - X_r) = \dfrac{fB}{Z}$$

(Formula 1)

Where, $d_x(m_l, m_r)$ indicates the optical difference between the images at the same coordinate. After 3D matching is performed on the two images to obtain the optical difference between two images of a same object, the depth information about the object can be obtained according to the relationship between optical difference and depth specified in formula 1, and thus the 3D image or video data can be obtained. In this method, a separate plane image or video camera is used to collect two images of a same scene from different aspects to enter the 3D image information. The structure is simple, and the method is easy to implement.

Method 2: The image or video collecting module 11 is a separate plane image or video camera. The image or video generating module 12 obtains the depth information about the object in the scene required by a 3D image by using the collected plane two-dimensional images. That is, the image or video generating module 12 needs to create a depth image and obtain the 3D image or video data by identifying and understanding the object in the images and obtaining the relative depth relationship. This method applies to the scenario when a 3D image with little depth information is required on a small screen.

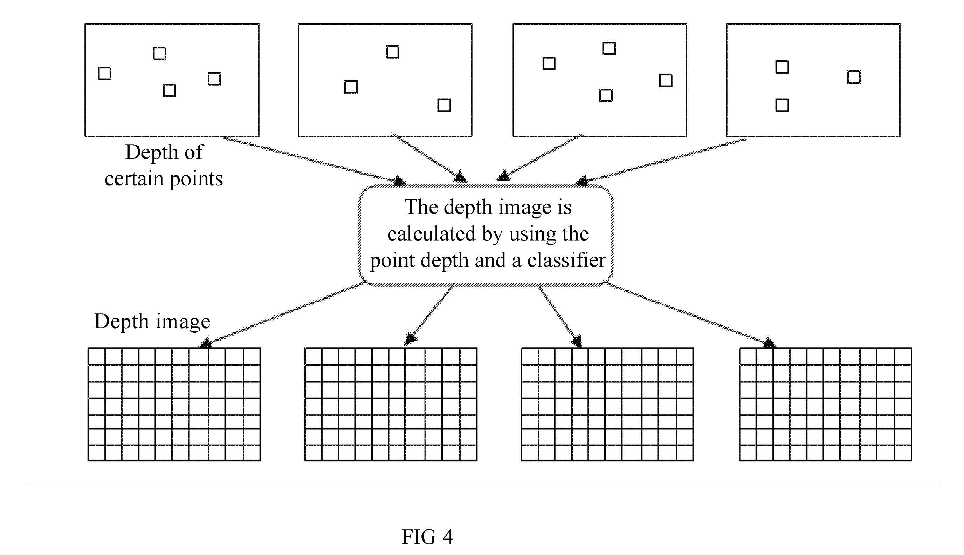

Method 3: The image or video collecting module 11 is a separate plane image or video camera. To process continuous image frames, the image or video generating module 12 can use the two-dimensional-to-3D image sequence processing method to divide the objects in the scene into foreground and background, set different depth information, and use the depth information and images or videos to generate 3D image or video data. FIG. 4 shows a process of applying a two-dimensional-to-3D image sequence processing method in an embodiment of the present invention. The image or video generating module 12 uses the depth data and a classifier to determine the functions of the depth features as image features and related positions according to the depth data of points in the image sequence, and uses the feature images to create at least a depth image of a certain frame in the image sequence, thus obtaining the 3D image or video data. In this method, a separate plane image or video camera is used to obtain continuous plane image frames, and the functions of feature images and related positions are used to create the depth image of the image sequence, thus implementing input of the 3D image sequence information.

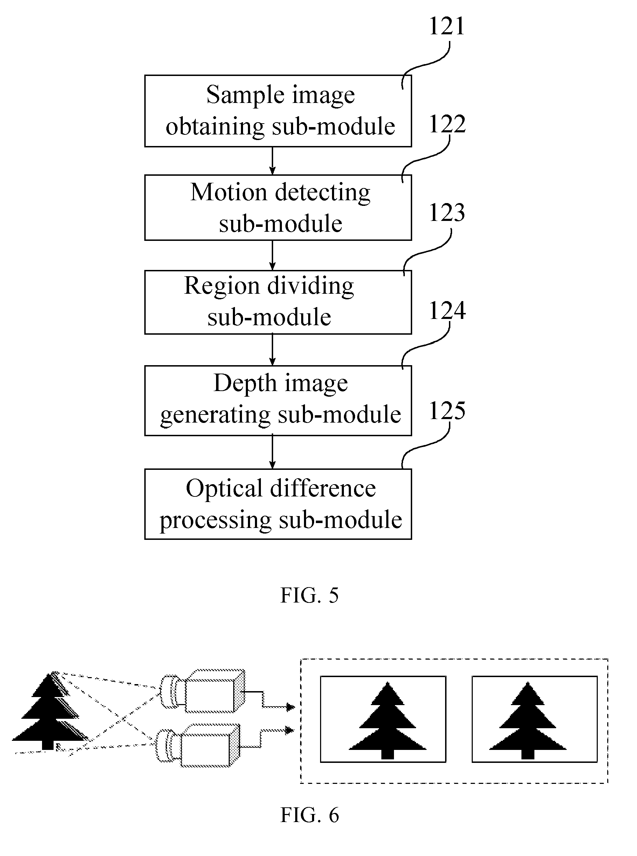

Method 4: The image or video collecting module 11 is a separate plane image or video camera. FIG. 5 shows a structure of an image or video generating module in an embodiment of the present invention. The image or video generating module 12 can include:

a sample image obtaining sub-module 121, adapted to collect the current image and the previous frame of image;

a motion detecting sub-module 122, adapted to detect motion pixels and static pixels by comparing the relevance pixels of the current image and the previous frame of image;

a region dividing sub-module 123, adapted to divide the current image into small search areas, and generate expression values for the motion pixels in each region according to the motion detection result;

a depth image generating sub-module 124, adapted to detect the motion pixel groups that construct motion object regions, set a depth value for each motion pixel group, and generate a depth image that is of the same size of the original image; and

an optical difference processing sub-module 125, adapted to generate 3D image or video data.

The image or video generating module 12 compares the current image with the previous frame of image to obtain the motion pixels in the current image, set a depth value for each motion pixel group, and generate a depth image that is of the same size of the original image, thus implementing input of the 3D image information.

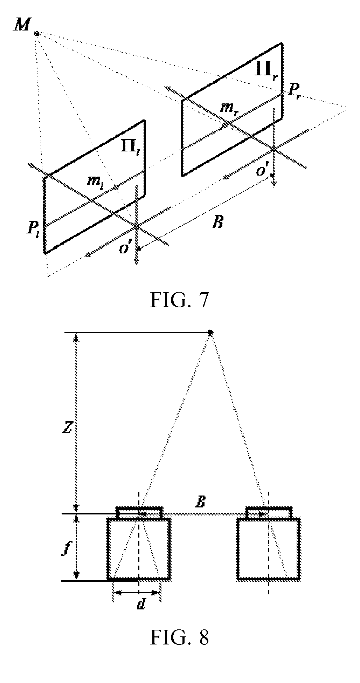

Method 5: The image or video collecting module 11 consists of two plane image or video cameras. FIG. 6 shows a structure of an image or video collecting module in an embodiment of the present invention. The image or video collecting module can collect two frames of images about the same contents of a scene from different positions. FIG. 7 shows a process of processing data by an image or video generating module in an embodiment of the present invention. The imaging points of the target point M in the scene in two frames are $m_l$ and $m_r$. The coordinate difference, that is, optical difference $d_x(m_l, m_r)$, between $m_l$ and $m_r$ can be obtained through 3D matching. FIG. 8 shows a symmetric relation between a target point and a camera in an embodiment of the present invention. The depth Z of the target point can be obtained by using formula 2 according to the symmetric relationship between the depth of the target point and the camera. In the formula, $f$ indicates the focus, $Z$ indicates the distance from the scene point to the optical center flat, $d$ indicates the distance between the imaging points in the centers of the two images, and $B$ indicates the optical center distance between the positions of the two cameras. Thus, the image or video generating module 12 generates the 3D image or video data.

$$Z = \frac{fB}{d_x(m_l, m_r)} \qquad \text{(Formula 2)}$$

The image or video collecting module 11 can be a 3D image or video camera. There are two types of 3D image or video cameras: a 3D image or video camera that consists of two separated lenses; a 3D image or video camera that consists of a plane camera and a depth sensor. The processing method of the image or video generating module 12 varies with the type of the 3D image or video camera.

Processing method 1: When the image or video collecting module is a binocular stereo camera that consists of two separated lenses, the two lenses can collect two different frames of images of a same scene, similar to the images of left eye and right eye of a human. Like the image or video collecting module that adopts two plan cameras, the depth information about the target in the scene is obtained through 3D matching. During image collection, the image pair in the two image video sequences can be matched to obtain the depth information of each frame of image, thus obtaining the 3D image or video data.

Processing method 2: When the image or video collecting module 11 is a 3D camera that consists of a plane camera and a depth sensor, the plane camera can collect plane images or videos while the depth sensor can obtain the depth information about the target in the two-dimensional images. The image or video generating module 12 generates the 3D image or video data according to the collected plane images or videos and depth information.

Therefore, the communication terminal provided in an embodiment of the present invention can use the image or video collecting and generating module 1 to collect and generate the 3D image or video data, and use the communication module 2 to send this 3D image or video data or receive other 3D image or video data for display on the image or video display module 3. The structure is simple, and the effects are good. The communication parties can sense the depth information about the scene of each other while hearing each other. In this way, the communication terminal offers better user experience.

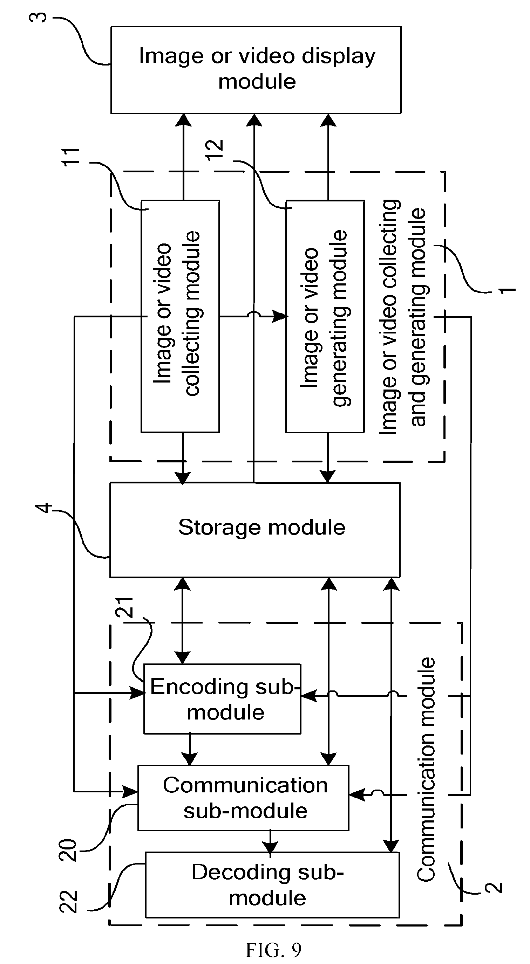

FIG. 9 shows a structure of a communication terminal in a second embodiment of the present invention. The communication terminal in this embodiment differs from the communication terminal in the preceding embodiment in that a storage module 4 is added. The storage module 4 can be adapted to store generated and received 3D image or video data and/or communication information.

Furthermore, the communication module 2 can include:

an encoding sub-module 21, adapted to encode collected or stored image or video data;

a communication sub-module 20, adapted to receive and send encoded or un-encoded image or video data; and
a decoding sub-module 22, adapted to decode the received encoded image or video data.

The communication module 2 sends and receives 3D image or video data, including but not limited to 3D images and other data such as sound. The communication modes include wired and wireless connection and transmission. The 3D image or video data can be transmitted in different modes. For example, the data is encoded and transmitted in two independent image or video streams, and the reference image and depth information are encoded and transmitted after the depth information is extracted. In addition, the reference image and various estimations are transmitted.

The communication module 2 can transmit the images collected by the image or video collecting module 11 or the 3D image or video data read from the storage module 4. The transmission contents can be encoded or un-encoded 3D image or video data.

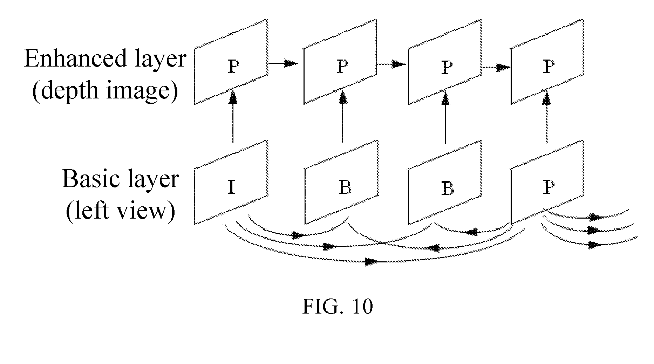

If the image or video collecting module 11 consists of two plane image or video cameras, the encoding sub-module 21 of the communication module 2 can separately encode and transmit the two collected image streams, or encode and transmit the obtained depth information and original images. FIG. 10 shows a process of using the layered coding scheme by a communication module of a communication terminal in a second embodiment of the present invention. The reference view (left view in the figure) selected from the center of the original image is encoded and transmitted at the basic layer. The depth information is encoded and placed at the enhanced layer. The basic layer adopts the standard hybrid coding scheme. The enhanced layer performs prediction and encoding based on the related frame at the basic layer and uses the intra-layer inter-frame prediction encoding. This coding scheme allows the receiving end to decode the contents encoded at the basic layer for traditional two-dimensional display, or the contents encoded at the basic layer and enhanced layer for 3D display.

In addition to encoding and transmitting images, the communication module 2 can receive 3D image or video data and other information sent from the network side. The received 3D image or video information is decoded by the decoding sub-module 22 and then placed into the image or video 3D display module 2 for 3D display, or placed in the storage module 3 for storage.

The image or video display module 3 can be a device for 3D display, for example, an automatic 3D display device, 3D glasses, and a holographic display device. The image or video display module 3 displays the 3D images or videos. The displayed images or videos can be the images or videos collected by the image or video collecting module 11, the contents received by the network, or the contents read from the storage module 4.

In addition, if the image or video display module 3 can display two-dimensional image information, the 3D image communication terminal can be compatible with traditional two-dimensional communication devices, facilitating smooth transition from two-dimensional plane communication to 3D communication.

During 3D video communication, the images or videos collected by the image or video collecting module 11 can be sent by the communication module 2; or the 3D image or video data generated by the image or video generating module 12 can be sent; or the images or videos and 3D image or video data stored in the storage module 4 can be sent; meanwhile, the communication module 2 receives the images or videos or 3D image or video data sent by the peer end, and the image or video display module 3 displays the 3D image or video data.

Therefore, the communication terminal provided in the second embodiment of the present invention can use the storage module 4 to store the images or videos collected by the image or video collecting and generating module 1, and generated 3D image or video data for better transmission.

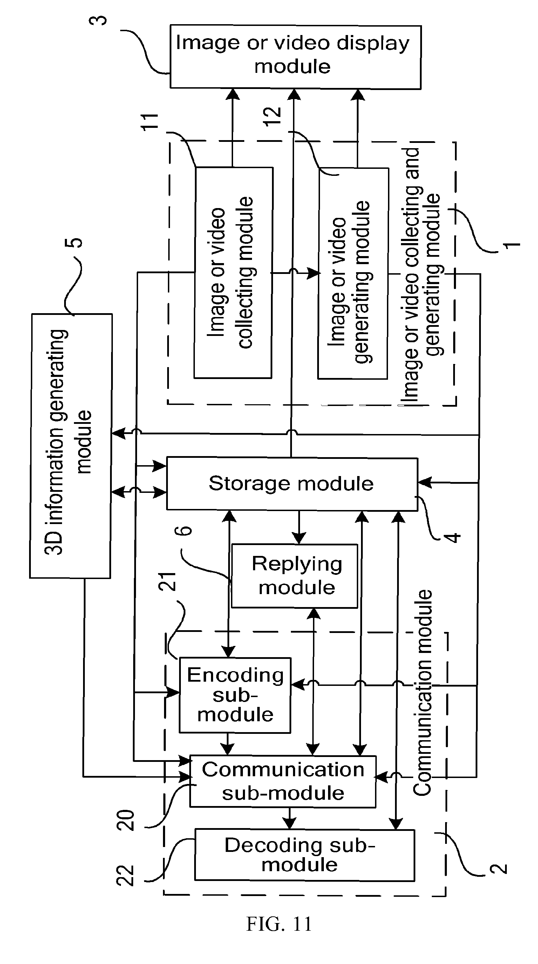

FIG. 11 shows a structure of a communication terminal in a third embodiment of the present invention. Compared with the communication terminal in the preceding embodiment, the communication terminal in the third embodiment adds a 3D information generating module 5 that is adapted to generate 3D image or video information based on the 3D image or video data and store the information in the storage module 4, and a replying module 6 that is adapted to automatically send 3D image or video information to the peer end through the communication module 2.

The 3D information generating module 5 can generate 3D image or video information according to the 3D image or video data generated by the image or video generating module 12, or the 3D image or video data stored in the storage module 4. The 3D image or video information can be sent by the communication module 2, or stored in the storage module 4 before being read and sent subsequently. When using the 3D image or video information for communication, the communication terminals can use the communication module 2 to send 3D image or video information, or receive 3D image or video information and display the information on the image or video display module 3.

The replying module 6 implements automatic reply through the following procedure: The image or video collecting module 11 collects images or videos, or the image or video generating module 12 generates 3D image or video data. The images or videos or 3D image or video data are stored in the storage module 4 as the reply contents. The contents can be configured for different users. When a user calls the current communication terminal, and no reply is performed, the replying module 6 automatically reads the settings of automatic reply. When the automatic reply is set to no processing, no processing is performed. Otherwise, the replying module 6 automatically answers the call, judges the calling party, reads the preset reply contents from the storage module 4 according to the calling party, plays the contents to the calling party, and records the message of the calling party in the storage module 4.

The communication terminal in the third embodiment of the present invention can use the 3D information generating module 5 to generate 3D image or video information, and store the information in the storage module 4; and use the replying module 6 to send 3D image or video information through the communication module 2 to the peer end. Therefore, the communication terminal provides more functions and better performance.

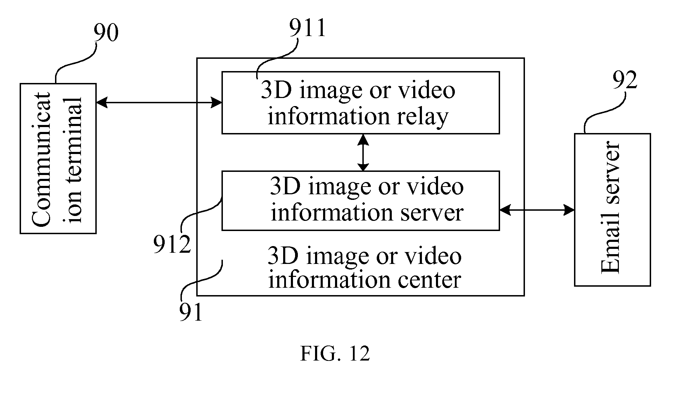

FIG. 12 shows a structure of an information system in an embodiment of the present invention. The information system includes a 3D image or video information center 91. The 3D image or video information center 91 further includes: a 3D image or video information relay 911, adapted to interact with the communication terminal 90; and a 3D image or video information server 912, adapted to store 3D image or video information and convert between 3D image or video information and SMS. Furthermore, as shown in FIG. 8, the information server includes an email server 92 that is adapted to provide the email service.

The communication terminal 90 can generate, manage, send, and receive 3D image or video information, and is connected to the 3D image or video information center 91 through a communication network in wired or wireless mode. As a core component of the information system, the 3D image or video information relay 911 interacts with the communication terminal 90. As a core component of the information system, the 3D image or video information server 912 stores the 3D image or video information, and converts formats. The format conversion includes conversion between 3D image or video information and plane image or video information, and reduction of resolution of the 3D image or video information. In this way, the 3D image or video information server 912 is compatible with various terminal display devices or SMS systems while improving the transmission efficiency. The email server 92 can provide the standard Internet mail service, receive 3D image or video information from the communication terminal 90, and send 3D image or video information from the communication terminal 90.

The information system can interact with other SMS centers.

The following methods can be adopted to implement compatible communication between the communication terminal 90 that supports 3D image or video information and various existing communication terminals 90.

1) The sender knows the processing capability of the peer communication terminal 90 and sends short messages that are compatible with the existing SMS systems.

2) The communication terminal 90 of the sender sends 3D image or video information. The 3D image or video information center 91 converts the format of the 3D image or video information according to the display capability of the communication terminal 90 of the receiver into the format that is compatible with the existing system, thus implementing communication with the existing SMS communication terminal 90.

3) The communication terminal 90 of the sender sends 3D image or video information. The 3D image or video information center 91 sends a simple notification to the existing SMS communication terminal 90 while sending the 3D image or video information to the mailbox. The user checks the information on a device that supports display of 3D short messages, such as a computer, on the Internet.

Using the information format conversion function of the 3D image or video information center 91, the system can convert the 3D image or video information into the related formats according to the display capability of the communication terminals 90 of the receivers when sending the 3D image or video information to multiple receivers, thus fully utilizing the network bandwidth. In addition, the system can send the related demanded contents according to the display capability of the communication terminal 90 of the receiver when receiving an on-demand request from a user.

Therefore, the information system in the present invention supports communication through 3D image or video information, so that the communication parties can sense the detailed information about the scene of each other as well as listening to each other, thus obtaining virtual reality communication experience. In addition, the system implements mutual sending of existing information between information systems with 3D image or video information and existing information through communication terminals.

It can be understood by those skilled in the art that all or certain steps in the preceding embodiments of the present invention can be performed by instructing related hardware through a program. The program can be stored in a storage medium that can be read by a computer. When being executed, the program performs the steps in the preceding embodiments of the present invention. The storage medium can be ROM, RAM, disk, or CD that can store program codes.

The preceding embodiments are intended to describe the technical scheme revealed in the present invention but not to confine the invention. It is understandable that those skilled in the art can make modifications or equivalent replacements on the technical scheme provided in embodiments of the present invention without departing from the spirit and scope of the technical scheme provided in the present invention.

**Claims**

1. A communication terminal, comprising:

an image or video collecting and generating module, adapted to collect and generate three-dimensional, 3D, image or video data;
a communication module, adapted to: send an image or video and the generated 3D image or video data; or receive an image or video and 3D image or video data; and
an image or video display module, adapted to present a 3D image or video according to the collected image or video or according to the received and generated 3D image or video data.

2. The communication terminal according to claim 1, wherein the image or video collecting and generating module further comprises:

an image or video collecting module, adapted to collect images or videos; and
an image or video generating module, adapted to generate the 3D image or video data based on the collected images or videos.

3. The communication terminal according to claim 2, wherein:

the image or video collecting module is a plane image or video camera, adapted to collect two frames of images of a same scene from different aspects; and the image or video generating module generates the 3D image or video data according to the images collected from the different aspects.

4. The communication terminal according to claim 3, wherein the image or video generating module generates the 3D image or video data according to the images collected from the different aspects by performing alignment and pre-processing for the images collected from the different aspects.

5. The communication terminal according to claim 3, wherein the image or video generating module generates the 3D image or video data according to the images collected from the different aspects by performing alignment and pre-processing for the images collected from the different aspects, performing 3D matching for the aligned images to obtain depth information, and then restructuring one of the images and the depth information.

6. The communication terminal according to claim 5, wherein the image or video generating module performs alignment pre-processing for the images collected from the different aspects, and performs 3D matching for the aligned images to obtain the depth information for generating the 3D image or video data by using a formula

$$\begin{cases} \dfrac{x_l}{X_l} = \dfrac{f}{Z} \\ \dfrac{x_r}{X_r} = \dfrac{f}{Z} \end{cases} \Rightarrow d_x(m_l, m_r) = x_l - x_r = \dfrac{f}{Z}(X_l - X_r) = \dfrac{fB}{Z} \ ,$$

in which: f indicates a focus; Z indicates a distance from a scene to an optical center flat, namely, the depth information; d indicates a distance for moving an imaging point related to a center of the image onto the same plane; B indicates a optical center distance between positions of two images collected by the camera; $m_l$ and $m_r$ are imaging points of a same point in the two images; and $d_x(m_l, m_r)$ indicates an optical difference of images at the same coordinate.

7. The communication terminal according to claim 2, wherein:

the image or video collecting module is a plane image or video camera, adapted to collect images or videos; and
the image or video generating module divides a target in a scene into foreground and background according to the collected images, sets different depth information, and uses the set depth information and images or videos to generate the 3D image or video data.

8. The communication terminal according to claim 2, wherein the image or video collecting module is a plane image or video camera adapted to collect images or videos, and the image or video generating module includes:

a sample image obtaining sub-module, adapted to collect a current image and a previous frame of image;
a motion detecting sub-module, adapted to detect motion pixels and static pixels by comparing relevance pixels in the current image and previous fame of image;
a region dividing sub-module, adapted to divide the current image into small search areas, and generate expression values for the motion pixels in each region according to a motion detection result;
a depth image generating sub-module, adapted to detect motion pixel groups that construct motion object regions, set a depth value for each motion pixel group, and generate a depth image that is of the same size of an original image; and
an optical difference processing sub-module, adapted to generate the 3D image or video data.

9. The communication terminal according to claim 2, wherein the image or video collecting module is a 3D image or video camera.

10. The communication terminal according to claim 9, wherein:

the 3D image or video camera is a binocular stereo camera that consists of two plane image or video cameras, adapted to collect two different images or videos; and
the image or video generating module matches images collected from two plane images or videos sequences to obtain depth information of each image and generate the 3D image or video data.

11. The communication terminal according to claim 9, wherein the 3D image or video camera consists of a plane image or video camera and a depth sensor adapted to collect plane images or videos and depth information, and the image or video generating module generates the 3D image or video data according to the collected plane images or videos and depth information of the plane images or videos.

12. The communication terminal according to claim 1, wherein the communication module further comprises:

an encoding sub-module, adapted to encode collected or stored image or video data;
a communication sub-module, adapted to receive and send encoded or un-encoded image or video data; and
a decoding module, adapted to decode the received encoded image or video data.

13. The communication terminal according to any one of claims 1-12, further including a storage module, adapted to store the generated and received 3D image or video data and/or communication information.

14. The communication terminal according to claim 13, further including a 3D information module, adapted to generate 3D image or video information according to the 3D image or video data, and store relevant information into the storage module.

15. The communication terminal according to claim 14, further including a replying module, adapted to automatically send the 3D image or video information to a peer end through the communication module.

16. An information system, including a three-dimensional, 3D, image or video information center, wherein the 3D image or video information center further comprises:

a 3D image or video information relay, adapted to interact with a communication terminal; and
a 3D image or video information server, adapted to store 3D image or video information and perform conversion between the 3D image or video information and short messages.

17. The information system according to claim 16, further including an email server, adapted to provide email service.

FIG. 1

FIG. 2

FIG. 3

Depth of
certain points

The depth image is
calculated by using the
point depth and a classifier

Depth image

FIG 4

121

Sample image
obtaining sub-module

122

Motion detecting
sub-module

123

Region dividing
sub-module

124

Depth image
generating sub-module

125

Optical difference
processing sub-module

FIG. 5

FIG. 6

FIG. 7

FIG. 8

FIG. 9

FIG. 10

FIG. 11

90

911

92

Communication terminal

3D image or video
information relay

Email server

3D image or video
information server

912

3D image or video
information center

91

FIG. 12

# INTERNATIONAL SEARCH REPORT

| International application No. |
| --- |
| PCT/CN2008/073398 |

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)

IPC: G06T 7/-, G06T1/-, H04Q7/-, H04W 88/-, H04W 92/-, H04N13/-, H04N 7/-

Documentation searched other than minimum documentation to the extent that such documents are included in the fields searched

Electronic data base consulted during the international search (name of data base and, where practicable, search terms used)

WPI; EPODOC; PAJ; CNPAT; CNKI; IEEE: THREE W DIMENSIONAL, stereo, stereoscopic, image, video, SMS, MMS, MESSAGE, short w message, multimedia w message, convert, conversion

**C. DOCUMENTS CONSIDERED TO BE RELEVANT**

| Category* | Citation of document, with indication, where appropriate, of the relevant passages | Relevant to claim No. |
| --- | --- | --- |
| X | DE 102004032191 A1 (SCANBULL SOFTWARE GMBH) 19 Jan. 2006 (19.01.2006) paragraphs [0005], [0027]-[0040] in the description | 1-17 |
| X | CN 1541485 A (KONINKL PHILIPS ELECTRONICS NV) 27 Oct. 2004 (27.10.2004) pages 1,4-6 in the description | 1-17 |
| A | CN 1728180 A (Zhang, Wentao) 01 Feb. 2006 (01.02.2006) the whole document | 1-17 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 15 Jan. 2009 (15.01.2009) | **05 Feb. 2009 (05.02.2009)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer LI,Ping Telephone No. (86-10)62413775 |

Form PCT/ISA/210 (second sheet) (April 2007)

<table>
<tr><td colspan="2" rowspan="2"><strong>INTERNATIONAL SEARCH REPORT</strong><br>Information on patent family members</td><td colspan="2">International application No.</td></tr>
<tr><td colspan="2"><em>PCT/CN2008/073398</em></td></tr>
</table>

| Patent Documents referred in the Report | Publication Date | Patent Family | Publication Date |
|---|---|---|---|
| DE 102004032191 A1 | 19.01.2006 | NONE | |
| CN 1541485 A | 27.10.2004 | US 2003035001 A1 | 20.02.2003 |
| | | WO 03017680 A1 | 27.02.2003 |
| | | EP 1433335 A1 | 30.06.2004 |
| | | JP 2005500757 T | 06.01.2005 |
| | | KR 20040030081 A | 08.04.2004 |
| CN 1728180 A | 01.02.2006 | NONE | |

Form PCT/ISA/210 (patent family annex) (April 2007)

# INTERNATIONAL SEARCH REPORT

International application No.

PCT/CN2008/073398

Continuation of:    A. CLASSIFICATION OF SUBJECT MATTER in the second sheet

H04W 88/02 (2009.01) i
G06T 7/00 (2006.01) n
H04W 92/18 (2009.01) n

Form PCT/ISA/210 (extra sheet) (April 2007)